(19) Europäisches Patentamt
European Patent Office
Office européen des brevets

(11) Publication number: 0 252 534 B1

# (12) EUROPEAN PATENT SPECIFICATION

(45) Date of publication of the patent specification: 29.08.90

(51) Int. Cl.$^5$: C10M 173/02, C10M 105/22, C10M 105/58

(21) Application number: 87200869.3

(22) Date of filing: 12.05.87

## (54) A method in the mechanical working of aluminium and aluminium alloys in the presence of a cooling lubricant, and a concentrate of the cooling lubricant.

(30) Priority: 13.05.86 SE 8602236

(43) Date of publication of application: 13.01.88 Bulletin 88/2

(45) Publication of the grant of the patent: 29.08.90 Bulletin 90/35

(84) Designated Contracting States: AT BE CH DE ES FR GB GR IT LI LU NL SE

(56) References cited:
EP-A- 0 115 926
EP-A- 0 192 358
EP-A- 0 206 833
US-A- 3 006 849
US-A- 3 374 171
US-A- 4 243 537
US-A- 4 259 206

(73) Proprietor: Berol (Suisse) S.A., 56 Grand-Rue, CH-1700 Fribourg(CH)

(72) Inventor: Sandberg, Elina, Lunden 13961, S-444 05 Ödsmal(SE)
Inventor: Sköld, Rolf, Dragonvägen 11, S-444 00 Stenungsund(SE)

(74) Representative: Andersson, Rolf, BEROL KEMI AB Box 851, S-444 01 Stenungsund(SE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



ACTORUM AG

## Description

The present invention relates to a method in the mechanical working of aluminium and aluminium alloys in the presence of a water-based cooling lubricant, and to a concentrate which, after dilution with water, may be used as cooling lubricant. The invention has been developed especially for the cold rolling.

Normally, kerosene-based cooling lubricants are used for cold rolling of aluminium. However, the use of kerosene-based cooling lubricants has been found to entail a number of disadvantages, among which may be mentioned high emission of hydrocarbons, considerable fire hazard and limited cooling effect. The poor cooling effect causes undesired restrictions in production capacity.

It has therefore been proposed to replace the kerosene-based cooling lubricants by water-based emulsions containing specific additives which reduce corrosin and/or the friction between the metal surface and the working tool, especially at high pressures. Such water-based systems are disclosed in, inter alia, US patent specifivation 4 243 537 and European patent application 115 926, and they contain as lubricating and corrosin inhibiting agents a mixture of an alkanol amine, a carboxylic acid, and a polyoxyalkylene compound. In US Patent Specification No. 3 374 171 similar lubricant compositions are disclosed for use in metal working, e.g. in the machine of iron. Reference is made to copending EP-A-D 252 533, which describes a method in the mechanical working of aluminium and aluminium alloys, in the presence of a waterbased cooling lubricant containing lubricanting and corrosion inhibiting agents, characterised in that the cooling lubricant at least at a temperature within the range 20–70°C is present in the form of a stable solution, and that it contain, as lubricating and corrosion inhibiting agents, a combination of

(a) a carboxyl compound having the formula $R_1COOH$, in which $R_1$ is hydrophobic group having 7–22 carbon atoms,

(b) a tertiary alkylalkanol amine having a molecular weight of less than 300, and

(c) a water soluble organic solubiliser having a molecular weight of less than 400 and a maximum hydroocarbon group of 6 carbon atoms, the base/acid equivalent ratio between the amine and the carboxyl compound being less than 1.0, preferably less than 0.9.

In spite of the obvious advantages provided by water-based cooling lubricant systems, they have not found wide-spread use in the rolling of aluminium or aluminium alloys because such systems, with low contents of lubricanting and corrosion inhibiting agents, cause water stains on the metal surfaces, poor lubrication and/or insufficient corrosion protection of the working tools. Water staining, so called white rust, of the aluminium metal surfaces is primarily due to the fact that the components included in the cooling lubricant provide insufficient corrosion protection for aluminium. Although, admittedly, the lubrication and corrosion protection are improved if the content of lubricant and corrosion inhibitor is increased, there is obtained during the subsequent heat treatment a disagreeable staining which is due to the fact that residues of the components of the cooling lubricant have been converted and burned into the metal surfaces.

Another problem that is difficult to master in rolling work is that roll marks and other physical damage may occur in the rolled metal surface because metal is torn from the billet which is being rolled, and is welded to the rolls. Under further rolling the resulting irregularities may damage the aluminium surface.

It has now been found possible to effect cold or hot rolling of aluminium or aluminium alloys so that satisfactory lubrication and low corrosion are obtained without any disagreeable staining of the metal surface during subsequent heat treatment. This is achieved, according to the present invention, in that the mechanical working is effected in the presence of a water-based cooling lubricant in the form a stable solution, at least at a temperature within the range of 20–70°C, and containing (a) a carboxyl compound having the formula $R_1COOH$, in which $R_1$ is a hydrophobic group having 7–14 carbon atoms and (b) a tertiary amine having a molecular weight of less than 300 and exhibiting at least one alkylsubstituent and at least one hydroxyl group containing substituent, but being free of any water-soluble organic solubilizer having a molecular weight of less than 400 and a maximum hydrophobic group of 6 carbon atoms, the base/acid equivalent ratio between the amine and the carboxyl compound being less than 1.0. By stable solution is meant in the context of this invention a solution which does not within a foreseeable period of time, i.e. during at least one month, separate into two or more phases.

It is of an essential importance that the bass/acid equivalent ratio is less than 1.0, preferably between 0.5–0.9 in order to obtain the above mentioned advantages. The EP application 115 926 and the US Patent Specification 3 374 171 only disclose embodiments where the equivalent ratio is well above 1.0. In the US Patent Specification 3 374 171 water soluble alkanolamines, such as triethanolamine, are used in a metal working fluid as a corrosion inhibiting agent, in which the carboxylic acid is soluble and forms the corresponding salt. In addition to the function as an inhibitor the alkanolamine also have the task of forming a residue upon machinery parts. This means that the alkanolamines have to be present in larger molar amounts than the carboxylic acid. According to the invention all residues on the aluminium surface have to be minimized in order to avoid the formation of annealing residues. This is achieved by using the tertiary amine in such an amount that the base/acid equivalent ratio is less than 1.0. The equivalent ratio of the invention results in a cooling lubricant that normally has a pH less than 8.5. In air the aluminium surface is oxidized and such a surface has usually an isoelectric point at a pH-value of about 8.5 to 9. The process of the invention is carried out on the acid side of the isoelectric point and preferably at a pH of from 6 to 8.

The choice of amine compound is also essential. The tertiary amines according to the invention contribute both to the formation of a solution and to the corrosion inhibiting properties without causing annealing residues. When the compositions disclosed in the US Patent Specification 4 243 537 is used in aluminium rolling tests, the aluminium sheets obtained exhibit physical damages as well as unacceptable annealing residues including miscolouring. It has been found that these results at least partly depends on the use of triethanolamine.

Practical tests have shown that it is of great importance to the rolling characteristics that the cooling lubricant is present in the form of a stable solution, and not as an emulsion. Presumably, the kinetics in the stable solution according to the invention are promoted such that the metal surfaces quickly obtain a homogeneous and well covering protective- layer of the carboxyl and the tertiary amine, whereby the formation of local deposits and excess which, during the subsequent heat treatment, may cause staining, is counteracted. A further essential advantage is that physical damage to the rolled surfaces can be avoided.

A further essential advantage of the cooling lubricant according to the invention is that it is easy to filter in order to remove impurities formed during working. The cooling lubricant may then be reused without any appreciable risk of soiling, metal-catalysed oxidative degradation, or microbial degradation.

In addition to the carboxyl compound (a) and the tertiary amine (b), the cooling lubricant may also contain (c) a polar, predominantly hydrophobic, nonionic compound in order to improve the lubrication.

The hydrophobic group $R_1$ of the carboxyl compound is preferably derived from straight saturated aliphatic compounds, although branched unsaturated aliphatic groups are also useful. Especially preferred groups are alkyl groups containing 8–11 carbon atoms. Specific examples of suitable carboxylic acids are pelargonic acid, decanoic acid, lauric acid, and coconut fatty acids as well as mixtures thereof.

The hydrophobic group $R_1$ may also contain heteroatoms, such as oxygen, sulphur and nitrogen which are- included in such functional groups as ether, thioether, ester, hydroxyl, carboxyl, and amide groups. Examples of such carboxyl compound are

$R_7OCH_2COOH$; $R_7OC_2H_4COOH$

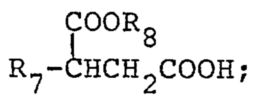 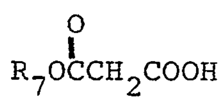

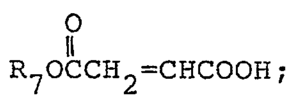 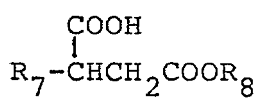

wherein $R_8$ is an alkyl having 1–4 carbon atoms, or hydrogen, and $R_7$ is a hydrocarbon group, preferably an aliphatic hydrocarbon group, $R_7$ and $R_8$ being selected such that the meaning of $R_1$ is satisfied.

The tertiary amine (b) contains at least one substituent with a hydroxyl group. It will therefore be water-soluble or capable of forming micelles. Preferred tertiary amines are those having the formula $R_2R_3R_4N$, wherein $R_2$ is a hydroxyalkyl group having 1–4 carbon atoms or a group of formula $(A)_nH$, wherein A is an alkyleneoxy group having 2–4 carbon atoms, and n is an integer from 1 to 3, $R_3$ is an alkyl group having 1–6 carbon atoms, and R4 represents a group having the same meaning as $R_2$ and $R_3$. Examples of suitable tertiary amines are diethanol ethyl amine, diethanol propyl amine, diethanol butyl amine, diethanol pentyl amine, diethanol hexyl amine and the corresponding dipropanol amines, and ethanol diethyl amine, ethanol dipropyl amine, ethanol dibutyl amine and the corresponding propanol amines. The above mentioned compounds may also be alkoxylated with ethylene oxide, propylene oxide and/or butylene oxide.

Usually, the amount of the carboxyl compound and the amine is selected in such a way that the base/acid equivalent ratio will be 0.5–0.9, which normally results in a cooling lubricant having a pH of about 6–8. A deficiency in the amine compound in relation to the carboxyl compound has been shown to improve the lubricating effect. If priority is given to good lubrication, it is advisable to select a base/acid equivalent ratio between the amine and the carboxyl compound of from 0.5 up to 0.8.

The nonionic compound (c) which primarily contributes to the lubricating effect of the cooling lubricant must be predominantly hydrophobic in character. By this is meant that it should have a HLB value of less than 10, preferably less than 9, such nonionic compounds being preferred as are essentially insoluble in water.

Suitable compounds (c) are those having the formula $R_5(B)_mOR_6$, wherein $R_5$ is a hydrocarbon or acyl group having 8–24 carbon atoms, B represents an oxyalkylene group having 2–4 carbon atoms, $R_6$ is hydrogen, an alkyl or acyl group having 1–4 carbon atoms, and m is an integer from 0 to 4.

The nonionic compound (c) may be both aromatic and aliphatic, but the aliphatic compounds are preferred. Examples of preferred nonionic compounds are hydroxyl compounds, such as octanol, decanol, dodecanol, tetradecanol, hexadecanol, oxo alcohols having 9–17 carbon atoms, nonyl phenol, octyl phenol, and dodecyl phenol, as well as ethoxylates of the above mentioned alcohols with 1–4 moles of ethylene oxide per mole of hydroxyl compound. These hydroxyl compounds may be summarised by the general formula $R_5(B)_mOH$ wherein $R_5$, B, and m have the meanings indicated above.

Other examples of nonionic compounds are fatty acids, alkoxylated or esterified with the compound $H(B)_mOR_6$ wherein B, $R_6$, and m have the meaning indicated above. Specific examples of this type of compounds are

$C_{11}H_{21}COOC_2H_40H$; $C_{11}H_{23}COOCH_3$; $C_9H_{19}CO(OC_2H_4)_20CH_3$

Preferred ester compounds are those having the general formula $R_50R_6$ wherein $R_5$ is an acyl group having 8–24 carbon atoms, and $R_6$ is an alkyl group having 1-4 carbon atoms.

In addition to the above mentioned components the water-based cooling lubricant according to the invention may also contain conventional additives, such as bactericidal agents, antifoam additives, viscosity controlling agents, perfumes and additional agents capable of supplementing lubrication and corrosion protection. Examples of additional agents improving the lubrication are polymers based on ethylene oxide and higher alkylene oxides. The alkylene oxides may be both random coupled and coupled in blocks.

In preparing the cooling lubricant according to the invention, it is preferred first to prepare a concentrate which suitably may contain the following components.

| Component | Content, % by weight | | |
|---|---|---|---|
| Carboxyl compound | 15–75, | preferably | 20–45 |
| Tertiary amine | 3–60, | " | 10–45 |
| Nonionic compound | 0–30, | " | 2–30 |
| Bactericidal agents, perfumes, viscosity controlling agents etc. | 0–30 | " | 0–15 |
| Water | 0–82 | " | 0–58 |

| Component | Content, % by weight | | |
|---|---|---|---|
| Carboxyl compound | 0.5–25, | preferably | 2–15 |
| Tertiary amine | 0.1–20, | " | 1–15 |
| Nonionic compound | 0.0–10, | " | 0.2–10 |
| Conventional additives, such as bactericidal agents, perfumes, viscosity controlling agents | 0–5, | " | 0.1–2 |
| Water | 25–99.4 | " | 40–95.7 |

The solution ready for use preferably has a water content within the range 70–95% by weight.

The invention is further illustrated by the following Example.

Example

Cold rolling of annealed aluminium sheet of grade AA3004 was carried out in a single stand with rolls having a diameter of 159 mm in the presence of any one of the cooling lubricants mentioned below. During rolling, the sheet thickness was reduced from 1.05 mm to 0.63 mm. The requisite rolling force was determined as the pressure in the hydraulic system transferring the compressive force to the rolls. After rolling, the surfaces were judged visually with respect to physical damage on a scale from 0 to 1. The value 0 designates a surface which is up to standard, i.e. a surface essentially free from physical damage, while 1 designates a surface not up to standard, i.e. a surface with visible physical damage. The rolled aluminium sheets were wiped clean and supplied with cooling lubricant in adundance, whereupon they were heated to 360°C for five hours in air. The appearance after heating was judged visually on a scale from 0 to 4 with respect to, on the one hand, the degree of blackening and, on the other hand, the proportion of stained surface.

| Scale, point | Degree of colour | Stained surface, % |
|---|---|---|
| 0 | Perfect no colour | 0 |
| 1 | Discernible Colour shade | 1–5 |
| 2 | Slight colour shade | 6–15 |
| 3 | Distinct colour shade | 16–60 |
| 4 | Strong colour shade | 51–100 |

The points of the degree of colour and stained surface were summed up to a total assessment under the concept annealing residues. Points 0-1 are excellent, points 2-3 are well up to standard, points 4-5 are just up to standard, and points 6-8 are below standard. By "just up to standard " is meant that the aluminium sheets from annealing residues point of view would just be commercially acceptable.

In order to determine the corrosive effect of the cooling lubricant upon iron, cast-iron ships were placed for 24 hours on a filter paper that had been soaked with a specific amount of the cooling lubricant, whereupon a grid having 126 intersections on an area of 1500 square cm was placed over the filter paper, and the occurance of corrosion was determined for each point of intersection on the grid. The iron corrosion was then expressed as the number of intersecting points with rust in relation to the total number of intersecting points.

White rust was determined by coating aluminium sheets with the cooling lubricant and then stacking the sheets and cooling them for 1 hour at –20°C, whereupon they were exposed for 2 hours to humid air of room temperature. After that, the sheets were heated to 80°C for 10 hours. The white rust was then assessed in the same manner as the iron corrosion.

From essentially anhydrous concentrates, the following cooling lubricants according to the invention were prepared and used for the cold rolling in this Example. All cooling lubricants were in the form of a stable solution at 20°C.

<u>Cooling lubricant 1</u>

| Component: | Content, % by weight |
|---|---|
| Lauric acid | 8.56 |
| $C_4H_9N(C_2H_4OH)_2$ | 6.44 |
| Water | balance |
| Base/acid equivalent ratio | 0.93 |

<u>Cooling lubricant 2</u>

| Component: | Content, % by weight |
|---|---|
| Lauric acid | 12.0 |
| $C_4H_9N(C_2H_4OH)_2$ | 8.0 |
| Water | balance |
| Base/acid equivalent ratio | 0.83 |

<u>Cooling lubricant 3</u>

| Component: | Content, % by weight |
|---|---|
| Lauric acid | 8.51 |
| $C_4H_9N(C_2H_4OH)_2$ | 6.34 |
| $C_{12-14}H_{25-29}OH$ | 0.14 |
| Water | balance |
| Base/acid equivalent ratio | 0.93 |

<u>Cooling lubricant 4</u>

| Component: | Content, % by weight |
|---|---|
| Pelargonic acid | 8.62 |
| $C_4H_9N(C_2H_4OH)_2$ | 6.38 |
| Water | balance |
| Base/acid equivalent ratio | 0.72 |

<u>Cooling lubricant 5</u>

| Component: | Content, % by weight |
|---|---|
| Decanoic acid | 11.26 |
| 2,2-Dimethylamino methyl propanol | 5.36 |
| Water | balance |
| Base/acid ratio | 0.70 |

For comparison, the following cooling lubricants were prepared. They all were in the form of an emulsion within the entire temperature range 20–70°C. The cooling lubricants A, B and C are in accordance with US Patent specification 4 243 537, while the cooling lubricants D and E are formulated in accordance with EP Patent Application 115 926.

Cooling lubricant A

| Component: | Content, % by weight |
|---|---|
| Oleic acid | 2 |
| Triethanol amine | 1 |
| Polyalkylene glycol (UCON 5HB 100) | 10 |
| Water | balance |
| Base/Acid equivalent ratio | 0.95 |

Cooling lubricant B

| Component: | Content, % by weight |
|---|---|
| Oleic acid | 2 |
| Triethanol amine | 1 |
| Polyalkylene glycol (UCON 5HB 100) | 10 |
| $C_9H_{19}\overset{O}{\overset{\|}{C}}O(C_2H_4O)_3\overset{O}{\overset{\|}{C}}C_7H_{15}$ | 3 |
| Water | balance |
| Base/acid equivalent ratio | 0.95 |

Cooling lubricant C

| Component: | Content, % by weight |
|---|---|
| Oleic acid | 2.0 |
| Triethanol amine | 1.6 |
| Polyalkylene glycol (UCON 5HB 100) | 10 |
| Water | balance |
| Base/acid equivalent ratio | 1.5 |

Cooling lubricant D

| Component: | Content, % by weight |
|---|---|
| Lauric acid | 1.5 |
| Diethanol amine | 1.5 |
| Polyalkylene glycol (Pluronic 17R2) | 10 |
| $C_9H_{19}\overset{\overset{O}{\Vert}}{C}O(C_2H_4O)_3\overset{\overset{O}{\Vert}}{C}C_7H_{15}$ | 1.0 |
| Water | balance |
| Base/acid equivalent ratio | 1.9 |

Cooling lubricant E

| Component: | Content, % by weight |
|---|---|
| Oleic acid | 1.0 |
| Triethanol amine | 0.8 |
| Polyalkylene glycol (Pluronic 17R2) | 5.0 |
| Water | balance |
| Base/acid equivalent ratio | 1.5 |

| Cooling lubricant | Force kN | Annealing residues | Iron corrosion | White rust % | Physical appearance |
|---|---|---|---|---|---|
| A | 13.3 | 5 | 5 | 20 | 1 |
| B | 13.5 | 8 | 4 | 6 | 1 |
| C | 14.0 | 8 | 0.1 | 12 | 1 |
| D | 16.5 | 5 | 0 | 0 | 1 |
| E | 14.5 | 5 | 4 | 30 | 1 |
| 1 | 13.5 | 3 | 0 | 0 | 0 |
| 2 | 13.5 | 3 | 0 | 0 | 0 |
| 3 | 13.2 | 3 | 0 | 0 | 0 |
| 4 | 13.5 | 2 | 0 | 0 | 0 |
| 5 | 13.0 | 3 | 0 | 0 | 0 |

As will be evident from these results, the cooling lubricants according to the invention provide, as compared with prior art technique, rolled aluminium surfaces having a far better physical appearance. Iron corrosion and white rust are maintained simultaneously at a very low level which, in general, is even essentially lower than for the cooling lubricants of the comparison compositions. In addition, the cooling lubricants according to the invention give a low level of annealing residues, which in all cases are essentially lower than in the comparison test.

**Claims**

1. A method in the mechanical working of aluminium or aluminium alloys in the presence of a waterbased cooling lubricant containing lubricating and corrosion inhibiting agents, characterised in that the cooling lubricant at least at a temperature within the range 20–70°C is present in the form of a stable solution, with the provisio that it is free of any watersoluble organic solubilizer having a molecular weight of less than 400 and a maximum hydrophobic group of 6 carbon atoms, and and also characterised in that it contains, as lubricating and corrosion inhibiting agents, a combination of (a) a carboxyl compound having the formula $R_1COOH$, in which $R_1$ is hydrophobic group having 7–14 carbon atoms, and (b) a tertiary amine having a molecular weight of less than 300 and exhibiting at least one alkyl substituent and at least one hydroxyl group containing substituent, the base/acid equivalent ratio between the amine and carboxyl compound being less than 1.0.

2. A method as claimed in claim 1 , characterised in that the cooling lubricant further contains (c) a polar, hydrophobic, nonionic compound.

3. A method as claimed in claim 2, characterised in that the compound (d) has the formula $R_5(B)_mOR_6$, wherein $R_5$ is a hydrocarbon or acyl group having 8–24 carbon atoms, B represents an oxyalkylene group having 2–4 carbon atoms, $R_6$ is hydrogen, an alkyl or acyl group having 1–4 carbon atoms, and m is an integer from 0 to 4.

4. A method as claimed in any one of claims 1–3, characterised in that the amine (b) having the formula $R_2R_3R_4N$, wherein $R_2$ is a hydroxylalkyl group having 1–4 carbon atoms or a group having the formula $(A)_nH$, wherein A is an alkyleneoxy group having 2–4 carbon atoms n is an integer from 1 to 3, $R_3$ is an alkyl group having 1–6 carbon atoms, and $R_4$ represents a group having the same meaning as $R_2$ or R3.

5. A method as claimed in any one of claims 1–4, characterised in that the hydrophobic group $R_1$ of the carboxyl compound (a) is an aliphatic hydrocarbon group having 8–11 carbon atoms.

6. A method as claimed in any one of claims 1–5, characterised in that the base/acid equivalent ratio between the amine and the carboxyl compound is from 0.5 to 0.9.

7. A method as claimed in any one of claims 1–6, characterised in that the cooling lubricant contains the carboxyl compound (a) in a content of 0.5–25% by weight, and the amine (b) in a content of 0.1–20% by weight.

8. A method as claimed in claim 7, characterised in that the content of the carboxyl compound (a) is 2–15% by weight and the content of the amine (b) is 1–15% by weight.

9. A method as claimed in any one of claims 2–8, characterised in that the cooling lubricant contains the nonionic compound (c) in a content of at most 10% by weight.

10. A concentrate which, after dilution with water, is suitable for use in the method as claimed in any one of claims 1–9, characterised in that it has the following composition:

| Component | Content, % by weight |
|---|---|
| The carboxyl compound (a) | 15–75 |
| The amine (b) | 3–60 |
| The nonionic compound (c) | 0–30 |
| Conventional additives, such as bactericidal agents, perfumes, viscosity controlling agents | 0–30 |
| Water | 0–82 |

with the proviso that it is free of any watersoluble organic solubilizer having a molecular weight of less than 400 and a maximum hydrophobic group of 6 carbon atoms.

11. A concentrate as claimed in claim 10, which has the following composition:

| Component | Content, % by weight |
|---|---|
| The carboxyl compound (a) | 20–45 |
| The amine (b) | 10–45 |
| The nonionic compound (c) | 2–30 |
| Conventional additives, such as bactericidal agents, perfumes, viscosity controlling agents | 0–15 |
| Water | 0–58 |

**Patentansprüche**

1. Verfahren zur mechanischen Bearbeitung von Aluminium oder Aluminiumverbindungen in Gegenwart eines kühlenden Schmiermittels auf Wasserbasis, welches schmierende und lorrosionshemmende Mittel enthält, dadurch gekennzeichnet, daß das kühlende Schmiermittel zumindest bei einer Temperatur im Bereich 20 bis 70°C in Form einer stabilen Lösung vorhanden ist, mit der Maßgabe, daß es frei ist von irgendeinem wasserlöslichen organischen Lösungsvermittler mit einem Molekulargewicht von weniger als 400 und einer maximalen hydrophoben Gruppe von 6 Kohlenstoffatomen, und dadurch gekennzeichnet ist, daß es als schmierende und korrosionshemmende Mittel eine Kombination von (a) einer Carboxylverbindung der Formel $R_1COOH$, worin $R_1$ eine hydrophobe Gruppe mit 7 bis 14 Kohlenstoffatomen darstellt, und (b) ein tertiäres Amin mit einem Molekulargewicht von weniger als 300 und mindestens einem Alkylsubstituenten und mindestens einem eine Hydroxylgruppe enthaltenden Substituenten enthält, wobei das Base/Säure-Äquivalentverhältnis zwischen dem Amin und der Carboxylverbindung kleiner als 1,0 ist.

2. Verfahren nach Anspruch 1, dadurch gekennzeichnet, daß das kühlende Schmiermittel weiterhin (c) eine polare, hydrophobe, nicht-ionische Verbindung enthält.

3. Verfahren nach Anspruch 1, dadurch gekennzeichnet, daß die Verbindung (d) die Formel $R_5(B)_mOR_6$ hat, worin R5 eine Kohlenwasserstoffgruppe oder Acrylgruppe mit 8 bis 24 Kohlenstoffatomen darstellt, B eine Oxyalkylengruppe mit 2 bis 4 Kohlenstoffatomen bedeutet, $R_6$ Wasserstoff, eine Alkyl- oder Alcylgruppe mit 1 bis 4 Kohlenstoffatomen ist und m eine ganze Zahl von 0 bis 4 ist.

4. Verfahren nach irgendeinem der Ansprüche 1 bis 3, dadurch gekennzeichnet, daß das Amin (b) die Formel $R_2R_3R_4N$ hat, worin $R_2$ eine Hydroxyalkylgruppe mit 1 bis 4 Kohlenstoffatomen oder eine Gruppe der Formel $(A)_nH$ ist, worin A eine Alkylenoxygruppe mit 2 bis 4 Kohlenstoffatomen darstellt, n eine ganze Zahl von 1 bis 3 ist, $R_3$ ein Alkylgruppe mit 1 bis 6 Kohlenstoffatomen ist und $R_4$ für eine Gruppe steht, die wie $R_2$ oder $R_3$ definiert ist.

5. Verfahren nach irgendeinem der Ansprüche 1 bis 4, dadurch gekennzeichnet, daß die hydrophobe Gruppe $R_1$ der Carboxylverbindung (a) eine aliphatische Kohlenwasserstoffgruppe mit 8 bis 11 Kohlenwasserstoffatomen ist.

6. Verfahren nach irgendeinem der Ansprüche 1 bis 5, dadurch gekennzeichnet, daß das Base/Säure-Äquivalentverhältnis zwischen dem Amin und der Carboxylverbindung 0,5 bis 0,9 beträgt.

7. Verfahren nach irgendeinem der Ansprüche 1 bis 3, dadurch gekennzeichnet, daß das kühlende Schmiermittel die Carboxylverbindung (a) in einem Gehalt von 0,5 bis 25 Gewichtsprozent und das Amin (b) in einem Gehalt von 0,1 bis 20 Gewichtsprozent enthält.

8. Verfahren nach Anspruch 7, dadurch gekennzeichnet, daß der Gehalt der Carboxylverbindung (a) 2 bis 15 Gewichtsprozent und der Gehalt des Amins (b) 1 bis 15 Gewichtsprozent beträgt.

9. Verfahren nach irgendeinem der Ansprüche 2 bis 8, dadurch gekennzeichnet, daß das kühlende Schmiermittel die nicht-ionische Verbindung (c) in einem Gehalt von höchstens 10 Gewichtsprozent enthält.

10. Konzentrat, welches nach Verdünnung mit Wasser geeignet ist für die Verwendung im Verfahren nah irgendeinem der Ansprüche 1 bis 9, dadurch gekennzeichnet, daß es die folgende Zusammensetzung hat:

| Bestandteil | Gehalt in Gewichtsprozent |
|---|---|
| Carboxylverbindung (a) | 15–75 |
| Aamin (b) | 3–60 |
| Nicht-ionische Verbindung (c) | 0–30 |
| Übliche Zusätze, wie z.B Bakterizide, Duftstoffe, Viskositätsregler, etc. | 0–30 |
| Wasser | 0–82 |

mit der Maßgabe, daß es frei ist von irgendeinem wasserlöslichen organischen Lösungsvermittler mit einem Molekulargewicht von weniger als 400 und einer maximalen hydrophoben Gruppe von 6 Kohlenstoffatomen.

11. Konzentrat nach Anspruch 10, welches die folgende Zusammensetzung hat:

| Bestandteil | Gehalt in Gewichtsprozent |
|---|---|
| Carboxylverbindung (a) | 20–45 |
| Amin (b) | 10–45 |
| Nicht-ionische Verbindung (c) | 2–30 |
| Übliche Zusätze, wie z.B Bakterizide, Duftstoffe, Viskositätsregler, etc. | 0–15 |
| Wasser | 0–58 |

## Revendications

1. Procédé de traitement mécanique d'aluminium ou d'alliages d'aluminium en présence d'un lubrifiant réfrigérant à base d'eau contenant des agents lubrificants et inhibiteurs de la corrosion, caractérisée en ce que le lubrifiant réfrigérant au moins à une température située dans un intervalle de 20–70°C est présent sous la forme d'une solution stable, à condition qu'il soit dépourvu de tout agent de solubilisation organique soluble dans l'eau ayant un poids moléculaire inférieur à 400 et un groupe hydrophobe maximum de 6 atomes de carbone, et caractérisée aussi en ce qu'il contient, comme agents lurifiants er inhibiteurs de la corrosion, une combinaison de (a) un composé carboxyle de formule $R_1COOH$, où R1 est un groupe hydrophbe ayant 7–14 atomes de carbone, et (b) une amine tertiaire ayant un poids moléculaire inférieur à 300 et présentant au moins un substituant alkyle et au moins un substituant un groupe hydroxyle, le rapport équivalent base/acide entre l'amine et le composé carboxyle étant inférieur à 1,0.

2. Procédé selon la revendication 1, caractérisé en ce que le lubrifiant contient en outre (c) un composé non-ionique hydrophobe polaire.

3. Procédé selon la revendication 2, caractérisé en ce que le composé (d) est de formule $R_5(B)_mOR_6$, où $R_5$ est un groupe hydrocarboné ou acyle ayant 8–24 atomes de carbone, B réprésente un groupe oxylkylène ayant 2–4 atomes de carbone, $R_6$ est un hydrogène, un groupe alkyle ou acyle ayant 1–4 atomes de carbone, et m est un nombre entier allant de 0 à 4.

4. Procédé selon l'une quelconque des revendications 1–3, caractérisé en ce que l'amine (b) est de formule $R_2R_3R_4N$, où R2 est un groupe hydroxyalkyle ayant 1–4 atomes de carbone ou un groupe de formule $(A)_nH$, où A est un groupe alkyleneoxy ayant 2–4 atomes de carbone, n est un nombre entier allant de 1 à 3, $R_3$ est un groupe alkyle ayant 1–6 atomes de carbone, et R4 représente un groupe ayant la même signification que $R_2$ ou $R_3$.

5. Procédé selon l'une quelconque des revendications 1–4, caractérisé en ce que le groupe hydrophobe $R_1$, du composé carboxyle (a) est un groupe hydrocarboné aliphatique ayant 8–11 atomes de carbone.

6. Procédé selon l'une quelconque des revendications 1–5, caractérisé en ce que le rapport équivalent base/acide entre l'amine et le composé carboxyle est de 0,5 à 0,9.

7. Procédé selon l'une quelconque des revendications 1–6, caractérisé en ce que le lubrifiant réfrigérant contient le composé carboxyle (a) en une teneur de 0,5–25% en poids, et l'amine (b) en une teneur de 0,1–20%.

8. Procédé selon la revendication 7, caractérisé en ce que la teneur en composé carboxyle (a) est de 2–15% en poids et la teneur en amine (b) est de 1–15% en poids.

9. Procédé selon l'une quelconque des revendications 2–8, caractérisé en ce que le lubrifiant réfrigérant contient le composé non-ionique (c) en une teneur d'au plus 10% en poids.

10. Concentré qui, après dilution avec de l'eau, convient pour application dans le procédé selon l'une quelconque des revendications 1–9, caractérisé en ce qu'il a la composition suivante:

| Composant | Teneur, % pond. |
|---|---|
| Composé carboxyle (a) | 15–75 |
| Amine (b) | 3–60 |
| Composé non-ionique (c) | 0–30 |
| Additifs classiques, comme agents bactéricides, parfums, agents de régulation de la viscosité | 0–30 |
| Eau | 0–82 |

avec la restriction qu'il est dépourvu de tout agent de solubilisation organique soluble dans l'eau ayant un poids moléculaire inférieur à 400 et un groupe hydrophobe maximum de 6 atomes de carbone.

11. Concentré selon la revendication 10, qui a la composition suivante:

| Composant | Teneur, % pond. |
|---|---|
| Composé carboxyle (a) | 20–45 |
| Amine (b) | 10–45 |
| Composé non-ionique (c) | 2–30 |
| Additifs classiques, comme agents bactéricides, parfums, agents de régulation de la viscosité | 0–15 |
| Eau | 0–85. |